# EUROPÄISCHE PATENTANMELDUNG

(11) **EP 4 678 261 A1**
(43) Veröffentlichungstag der Anmeldung: **14.01.2026**
(21) Anmeldenummer: 25184713.3
(22) Anmeldetag: 24.06.2025
(51) Int. Cl.: B01D 21/00, B01D 21/02, E03F 5/14

(54) **ROHRSEDIMENTATIONSANLAGE**

(30) Priorität: 11.07.2024 DE 102024206543
(71) Anmelder: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Schneck & Hübner Patentanwälte Rechtsanwälte PartGmbB

(57) **Zusammenfassung**

Eine Rohrsedimentationsanlage umfasst einen Zulaufschacht (4), einen Ablaufschacht (34), mindestens einen Zwischenschacht (18, 28, 30, 32), der mit dem Zulaufschacht (4) und mit dem Ablaufschacht (34) mittels Fluidleitungen (9, 15, 25, 29, 31, 33) fluidtechnisch verbunden ist, sowie mindestens ein Anstauelement (14, 21, 22, 24) zum Anstauen einer Fluidströmung in der Rohrsedimentationsanlage (1), wobei das mindestens eine Anstauelement (14, 21, 22, 24) an dem mindestens einen Zwischenschacht (18, 28, 30, 32) und/oder an mindestens einer der Fluidleitungen (9, 15, 25, 31) angeordnet ist.

## Beschreibung

Der Inhalt der deutschen Patentanmeldung DE 10 2024 206 543.9 wird durch Bezugnahme hierin aufgenommen.

Die Erfindung betrifft eine Rohrsedimentationsanlage.

DE 10 2004 008 960 A1 offenbart eine Regenwasserbehandlungsanlage mit einem Sedimentationsrohr, in dem ein oberer Strömungsraum von einem unteren Sedimentationsraum durch Trennwände und Querstege getrennt ist. Durch eine Strömungsberuhigung können sich Schmutzfrachtanteile im Regenwasser absetzen. Die Herstellung und/oder die Installation des Sedimentationsrohres, insbesondere die Befestigung der Trennwände und/oder der Querstege im Sedimentationsrohr, sind aufwändig und kompliziert.

Der Erfindung liegt die Aufgabe zugrunde, die Herstellung und/oder die Installation einer Rohrsedimentationsanlage zu vereinfachen.

Diese Aufgabe ist durch eine Rohrsedimentationsanlage mit den im Anspruch 1 angegebenen Merkmalen gelöst.

Erfindungsgemäß wurde erkannt, dass eine Strömungsberuhigung in einer Rohrsedimentationsanlage unkompliziert mit mindestens einem Anstauelement erzielt werden kann, das an einem Zwischenschacht und/oder an einer daran angeschlossenen Fluidleitung angeordnet und insbesondere daran ausgebildet ist. Das mindestens eine Anstauelement bewirkt unmittelbar das Anstauen der Fluidströmung in der Rohrsedimentationsanlage, so dass die Fluidströmung beruhigt wird und Schmutzfrachtanteile in dem Wasser, insbesondere Regenwasser, sich absetzen können. Sedimente im Wasser werden zuverlässig in der Rohrsedimentationsanlage zurückgehalten, bevor das Wasser in eine Blockversickerungsanlage oder Rohrversickerungsanlage oder in ein Regenrückhaltesystem bzw. eine Regenwasserstauraumlösung weitergeleitet wird.

Insbesondere sind bei der erfindungsgemäßen Rohrsedimentationsanlage Trennelemente im Sedimentationsrohr entbehrlich. Das Sedimentationsrohr ist unkompliziert ausgeführt. Herstellung und Installation der Rohrsedimentationsanlage sind vereinfacht.

Insbesondere besteht eine Erkenntnis der Erfindung darin, dass eine effiziente Strömungsberuhigung durch eine vorteilhafte Fluidströmungsführung ermöglicht ist.

Der mindestens eine Zwischenschacht ist fluidtechnisch mittels Fluidleitungen mit einem Zulaufschacht und mit einem Ablaufschacht verbunden. Die fluidtechnische Verbindung kann direkt oder indirekt ausgeführt sein. Bei der direkten fluidtechnischen Verbindung ist der mindestens eine Zwischenschacht mittels einer Fluidleitung unmittelbar an den Ablaufschacht und/oder den Zulaufschacht angeschlossen. Bei der indirekten fluidtechnischen Verbindung ist der mindestens eine Zwischenschacht mittels Fluidleitungen und mindestens einem weiteren Zwischenschacht an den Ablaufschacht und/oder den Zulaufschacht angeschlossen. Die Schächte ermöglichen jeweils eine Kontrolle, insbesondere zur Inspektion und/oder Wartung. Insbesondere ermöglichen die Schächte das Spülen und/oder Reinigen der Rohrsedimentationsanlage. Der Schachtdurchmesser für den Zulaufschacht und/oder den mindestens einen Zwischenschacht mit Absetzraum beträgt mindestens 500 mm und insbesondere mindestens 600 mm.

Die Rohrsedimentationsanlage kann mehrere Zwischenschächte aufweisen, insbesondere mindestens zwei Zwischenschächte, insbesondere mindestens drei Zwischenschächte, insbesondere mindestens vier Zwischenschächte, insbesondere mindestens fünf Zwischenschächte und insbesondere bis zu 10 Zwischenschächte.

Die Fluidleitungen sind jeweils insbesondere als Kunststoffrohre ausgeführt und weisen jeweils eine Mittenachse und eine senkrecht dazu orientierte Strömungsquerschnittsfläche auf. Die Strömungsquerschnittsfläche ist insbesondere rund. Die Rohrsedimentationsanlage gibt eine Fluidströmungsrichtung vor, die von dem Zulaufschacht entlang der daran angeschlossenen Fluidleitung zu dem mindestens einen Zwischenschacht und von dort über mindestens eine weitere Fluidleitung und gegebenenfalls weitere Zwischenschächte und Fluidleitungen zu dem Ablaufschacht gerichtet ist.

Ein Innendurchmesser der Fluidleitung beträgt insbesondere mindestens 400 mm. Die Kunststoffrohre der Fluidleitungen sind insbesondere aus Polyethylen (PE), Polypropylen (PP) und/oder aus Polyvinylchlorid (PVC) hergestellt, insbesondere in einem Extrusionsverfahren. Insbesondere weist das Kunststoffrohr an seiner Rohraußenseite senkrecht zur Mittenachse, die eine Rohrlängsachse bildet, Erhebungen auf. Das Kunststoffrohr ist insbesondere als Verbundrohr ausgeführt mit einem einen Innendurchmesser aufweisenden Innenrohr und mit einem mit dem Innenrohr verschweißten Außenrohr, das einen Außendurchmesser aufweist, der insbesondere mindestens 108 % des Innendurchmessers beträgt. Ein derartiges Verbundrohr ist mechanisch robust. Die Erhebungen bewirken eine verbesserte Stabilität. Alternativ kann das Kunststoffrohr auch als Vollwandrohr oder als Rippenrohr ausgeführt sein.

Zulaufschacht, Ablaufschacht und/oder Zwischenschacht können aus einem Kunststoffmaterial, insbesondere PE, PP und/oder PVC, oder aus Beton hergestellt sein.

Die erfindungsgemäße Rohrsedimentationsanlage und insbesondere die damit erreichbare Sedimentationsleistung kann in Abhängigkeit der erwarteten Regenwassermenge und der damit zu erwartenden Schmutzfracht ausgelegt werden, insbesondere durch Anzahl und/oder Länge der Fluidleitungen, Anzahl der Zwischenschächte und/oder Anzahl und Ausgestaltung des mindestens einen Anstauelements.

Verbindungen von Fluidleitungen miteinander und/oder deren Anbindung an Zulaufschacht, Ablaufschacht und/oder Zwischenschacht können mittels Dichtungen, insbesondere in Form von Profildichtringen, abgedichtet sein. Diese Verbindungen sind mediendicht ausgeführt. Die Profildichtringe sind an die jeweilige Rohrstruktur, insbesondere Rohrgeometrie, angepasst und darauf abgestimmt.

Die Ausgestaltung des mindestens einen Anstauelements gemäß Anspruch 2 ist besonders unkompliziert. Insbesondere ist ein Reduzierungselement an sich aus dem Stand der Technik bekannt. Ein derartiges Reduzierungselement kann als Verbindungsstück ausgeführt sein für eine Fluidleitung mit einem ersten Strömungsquerschnitt auf eine Fluidleitung mit einem zweiten Strömungsquerschnitt, der kleiner ist als der erste Strömungsquerschnitt. Bei dem Reduzierungselement ist eine Zulauföffnung größer als eine Ablauföffnung. Vorteilhaft ist es, wenn Zulauföffnung und Ablauföffnung exzentrisch zueinander angeordnet sind. An dem Reduzierungselement ist zwischen der Zulauföffnung und der Ablauföffnung ein Verjüngungsabschnitt angeordnet. Der Anstaueffekt ist dadurch verbessert. Insbesondere ist die geneigte Wandung des Reduzierungselements, die zwischen Zulauföffnung und Ablauföffnung angeordnet ist, in der Einbausituation des Reduzierungselements vertikal unten angeordnet. Insbesondere ist das Reduzierungselement einstückig ausgeführt und insbesondere aus einem Kunststoffmaterial, insbesondere PE, PP und/oder PVC hergestellt.

Bei einer Anordnung des Reduzierungselements gemäß Anspruch 3 wird zusätzlicher, also größerer Raum für die Zurückhaltung von Sedimenten bereitgestellt. Außerdem wird durch ein mehrstufiges Anstauen eine zusätzliche Verbesserung bei der Ablagerung der Sedimente im Sohlenbereich der Fluidleitung ermöglicht.

Eine Ausführung des mindestens einen Anstauelements gemäß Anspruch 4 ermöglicht eine vereinfachte Installation der Rohrsedimentationsanlage. Zusätzliche Bauelemente sind entbehrlich. Das Anstauelement ist insbesondere als Nebenformelement an dem Zwischenschacht ausgebildet. Dass der Zwischenschacht als Umlenkschacht ausgeführt ist, bedeutet, dass die Mittenachse der in den Zwischenschacht einmündenden Fluidleitung und die Mittenachse der von dem Umlenkschacht ausgehenden Fluidleitung nicht parallel sind. Insbesondere schließen die Mittenachsen in einer horizontalen Ebene, insbesondere in einer horizontalen Projektionsebene einen Umlenkwinkel ein, der größer ist als 0° und kleiner ist als 180° und insbesondere zwischen 30° und 150°, insbesondere zwischen 60° und 120°, insbesondere zwischen 75° und 105° und insbesondere 90° beträgt. Der Umlenkwinkel definiert die Umlenkung der Fluidströmung entlang der Rohrsedimentationsanlage. Der Umlenkwinkel ist insbesondere zwischen Vertikalebenen ausgebildet, die jeweils die Mittenachsen der an dem Umlenkschacht angeschlossenen Fluidleitungen enthalten. Durch die Verwendung von Zwischenschächten kann eine Rohrsedimentationsanlage ausgeführt werden, bei der die Fluidleitungen beispielsweise in einer Mäanderanordnung oder in einer Spiralanordnung ausgeführt sind.

Eine Ausführung des Anstauelements gemäß Anspruch 5 ermöglicht eine Rückströmung im Umlenkschacht. Anteile von Schmutzfrachten können unmittelbar im Zwischenschacht abgeschieden werden. Außerdem wird eine Rückströmung in der Fluidleitung weg von dem Umlenkschacht in Richtung des Zulaufschachts begünstigt.

Das mindestens eine Anstauelement umschließt einen, insbesondere rohrförmigen Totraum, der insbesondere durch einen Rohrstutzen gebildet ist, der mittels einer Kappe abgeschlossen ist. Die dadurch erzeugte Rückströmung verbessert die Sedimentationswirkung. Insbesondere ist der Totraum, insbesondere der Rohrstutzen, parallel und insbesondere koaxial, zu der Zwischenschacht-Öffnung orientiert, an der die einmündende Fluidleitung angeschlossen ist. Insbesondere ist der Totraum, insbesondere der Rohrstutzen, derart fluchtend an dem Zwischenschacht ausgebildet, dass die Querschnittsflächen der einmündenden Fluidleitung und des Totraums entlang ihrer Mittenachsen zumindest teilweise, insbesondere vollständig, überlappen.

Eine Rohrsedimentationsanlage gemäß Anspruch 6 weist eine erhöhte Gestaltungsfreiheit für die Gesamtanlage auf. Eine Hauptleitung weist eine größere Strömungsquerschnittsfläche auf als eine Nebenleitung. Insbesondere beträgt das Verhältnis der Innendurchmesser von Hauptleitung zu Nebenleitung mindestens 2,5, insbesondere mindestens 3, insbesondere 3,5 und insbesondere mindestens 4. Insbesondere sind die Hauptleitungen jeweils parallel zueinander angeordnet. Die Nebenleitungen sind insbesondere parallel zueinander und insbesondere mit einem Umlenkwinkel bezüglich der Hauptleitungen angeordnet, der insbesondere 90° beträgt.

Der Innendurchmesser der Hauptleitung beträgt insbesondere mindestens 400 mm. Die Hauptleitung weist eine Länge auf, die mindestens 3.000 mm, insbesondere mindestens 3.500 mm, insbesondere mindestens 4.000 mm und insbesondere mindestens 5.000 mm beträgt. Die Länge der Nebenleitung kann länger oder kürzer als die der Hauptleitung sein. Die Länge der Nebenleitung hängt im Wesentlichen von der Gesamtanordnung der Rohrsedimentationsanlage ab. Bei einer Mäanderanordnung ist die Länge der Nebenleitung vergleichsweise kurz und beträgt insbesondere höchstens 1.000 mm, insbesondere höchstens 800 mm, insbesondere höchstens 600 mm.

Eine Rohrsedimentationsanlage gemäß Anspruch 7 weist eine verbesserte Rückspülung entlang der Fluidleitungen auf. Im Sohlenbereich der Fluidleitung abgelagerte Sedimente können zuverlässig rückgespült werden. Dies führt bereits beim Füllvorgang der Fluidleitungen zu einer verstärkten Rückführung der Sedimente zu den Schächten. Die mindestens eine Fluidleitung, die mit einer Steigung gegenüber der Horizontalen angeordnet ist, ist insbesondere eine Hauptleitung. Die Steigung ist entlang der Fluidströmungsrichtung orientiert. Die Steigung wird auch als negatives Gefälle bezeichnet. Der Steigungswinkel gegenüber der Horizontalen beträgt zwischen 2° und 5°.

Ein Absetzraum im Zulaufschacht und/oder in dem mindestens einen Zwischenschacht ermöglicht das Sammeln der abgelagerten und/oder rückgespülten Sedimente. Insbesondere wird der Rückspülungsweg für die Sedimente dadurch verkürzt. Der Absetzraum wird auch als Sandfang bezeichnet. Der Absetzraum ist vertikal unterhalb der an dem jeweiligen Schacht angeschlossenen ausgehenden Fluidleitung angeordnet. Als ausgehende Fluidleitung wird die Fluidleitung bezeichnet, die das Fluid aus dem Schacht abführt. Insbesondere ist die Fluidleitung horizontal höherliegend als die zuführende Fluidleitung am Schacht angeordnet. Der Zulaufschacht und/oder der mindestens eine Zwischenschacht vereinfacht das Absaugen der Rückstände und/oder der Sedimente aus dem Sandfang.

Es ist insbesondere denkbar, dass bei mehreren Zwischenschächten zumindest ein Zwischenschacht ohne Absetzraum ausgeführt ist. Es ist insbesondere nicht erforderlich, dass sämtliche Zwischenschächte einen Absetzraum aufweisen.

Eine Rohrsedimentationsanlage gemäß Anspruch 9 verbessert das Absetzen der Sedimente entlang der Rohrsedimentationsanlage.

Die Höhe der Mittenachsen der Fluidleitungen entspricht ihrem vertikalen Höhenwert, wenn die Fluidleitung horizontal verläuft. Wenn die Fluidleitung eine Steigung aufweist, ergibt sich eine mittlere Höhe aus dem Höhenwert am Mittelpunkt der Fluidleitung. Wenn entlang der Fluidleitung ein Reduzierungselement angeordnet ist, also die Fluidleitung eine gestufte Mittenachse aufweist, wird die mittlere Höhe abschnittsweise bestimmt.

Bei der Rohrsedimentationsanlage können auch mehr als zwei Fluidleitungen unterschiedliche mittlere Höhen ihrer Mittenachsen aufweisen. Insbesondere können auch sämtliche Fluidleitungen mit unterschiedlichen mittleren Höhen ihrer Mittenachsen ausgeführt sein.

Die Rohrsedimentationsanlage gemäß Anspruch 10 ist unkompliziert in der Herstellung und insbesondere unkompliziert in der Installation. Der Zwischenschacht gibt eine, insbesondere eindeutige, Fluidströmungsrichtung vor. Insbesondere ist die Rohrsedimentationsanlage verzweigungsfrei ausgeführt.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine Schnittansicht gemäß Schnittlinie I-I in Fig. 2 auf eine erfindungsgemäße Rohrsedimentationsanlage mit einem Zulaufschacht, einem Ablaufschacht, vier Zwischenschächten und mehreren Anstauelementen,
- Fig. 2: eine Schnittansicht gemäß Schnittlinie II-II in Fig. 1,

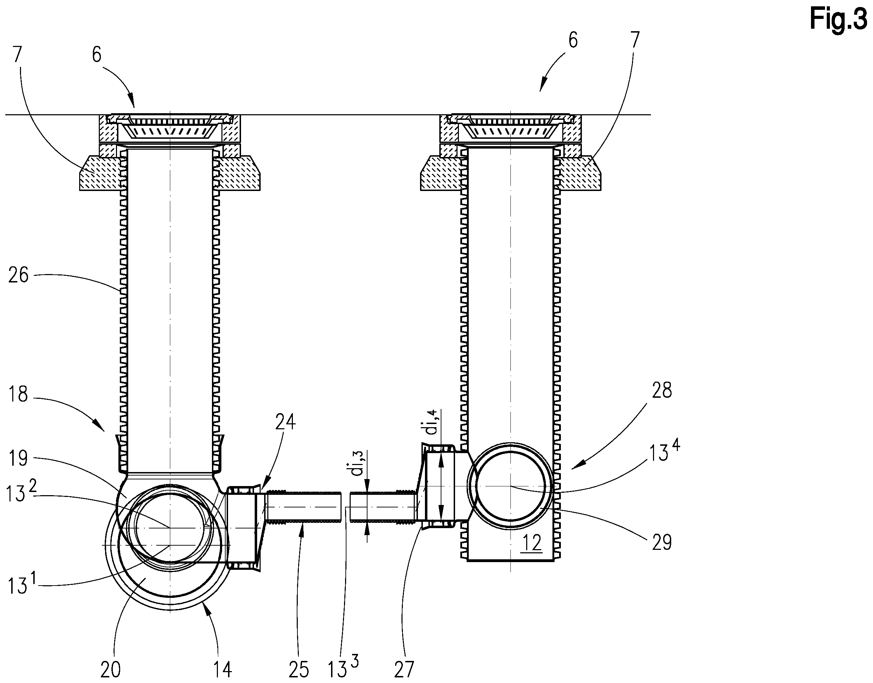

- Fig. 3: eine Schnittansicht gemäß Schnittlinie III-III in Fig. 1,
- Fig. 4: eine Schnittdarstellung gemäß Schnittlinie IV-IV in Fig. 1,

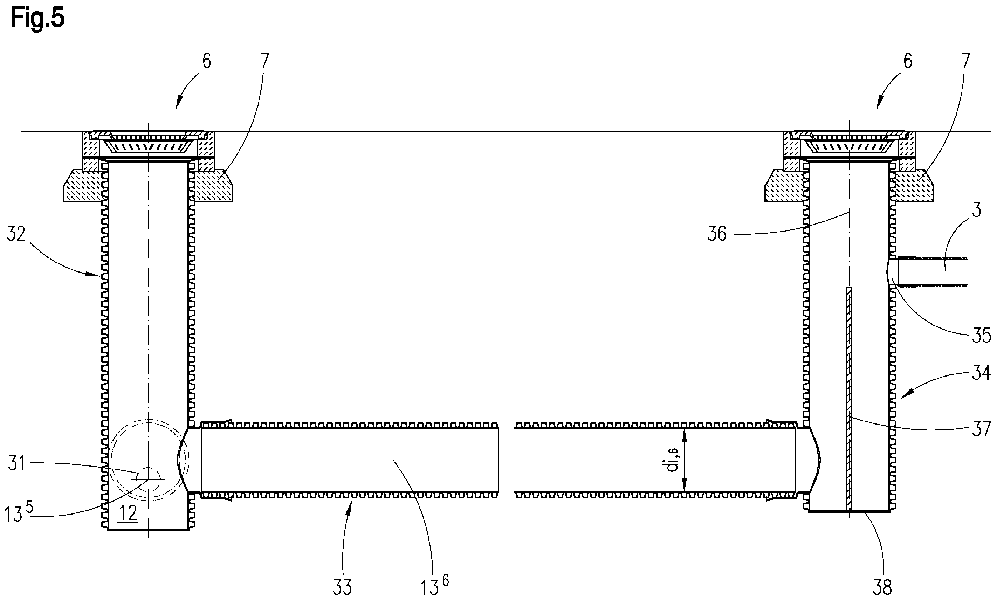

- Fig. 5: eine Schnittansicht gemäß Schnittlinie V-V in Fig. 1.

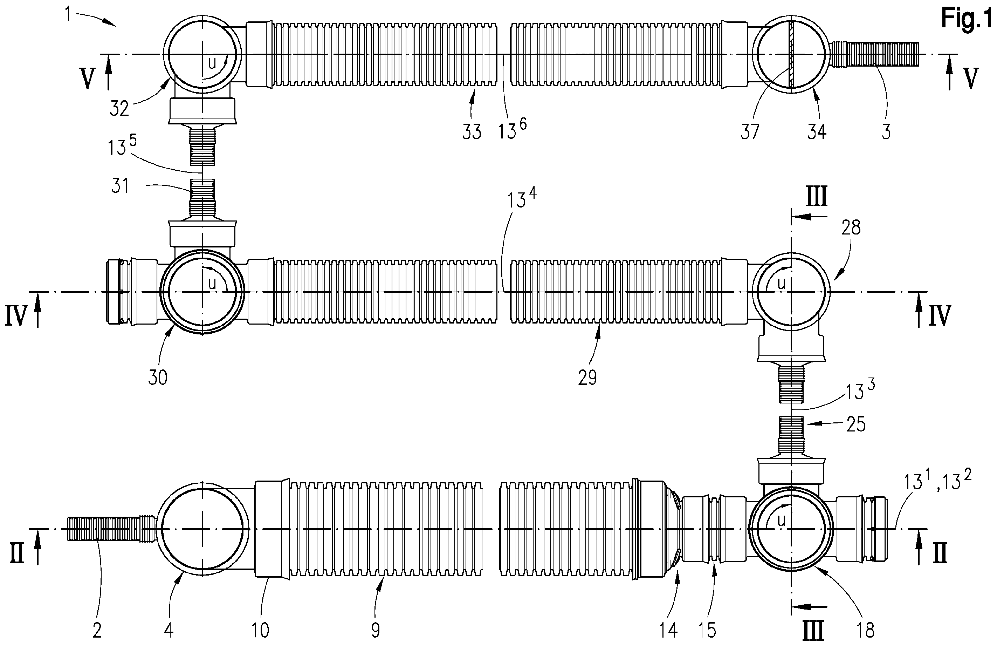

Eine in Fig. 1 insgesamt mit 1 gekennzeichnete Rohrsedimentationsanlage dient zum Reinigen eines flüssigen Mediums, insbesondere von Wasser und insbesondere von Regenwasser. Zu diesem Zweck ist die Rohrsedimentationsanlage 1 mittels einer Zulaufleitung 2 an eine nicht dargestellte Mediumquelle, insbesondere einen Regenwasserzulauf, angeschlossen. Das mittels der Rohrsedimentationsanlage 1 gereinigte Medium wird mittels einer Ablaufleitung 3 an ein nachgelagertes, nicht dargestelltes, Funktionsbauwerk abgeleitet, insbesondere zur Versickerung und/oder Rückhaltung, insbesondere in einer Versickerungsanlage, einer Regenrückhalteanlage und/oder in einer Vorflut.

Die Rohrsedimentationsanlage 1 umfasst einen Zulaufschacht 4, in den die Zulaufleitung 2 an einer Zulaufschachtzuführöffnung 5 mündet. Der Zulaufschacht 4 ist gemäß dem gezeigten Ausführungsbeispiel aus einem Kunststoffmaterial, insbesondere PE oder PP, als Verbundrohr ausgeführt.

An seiner Oberseite weist der Zulaufschacht 4 eine Schachtabdeckung 6 auf, die vertikal beispielsweise an einem Betonfundament 7 oder an einem Betonauflagering abgestützt ist. Das Verbundrohr des Zulaufschachts 4 ist an dem Betonfundament 7 gehalten. Das Verbundrohr des Zulaufschachts 4 ist hohlzylindrisch ausgeführt.

An dem Zulaufschacht 4 ist an einer Zuluftschachtabführöffnung 8 eine erste Fluidleitung 9 mittels einer Verbindungsmuffe 10 angeschlossen. Die Verbindungsmuffe 10 ist insbesondere einteilig an dem Verbundrohr des Zulaufschachts 4 angeformt bzw. angeschweißt.

Die erste Fluidleitung 9 ist ein Sedimentationsrohr. Die erste Fluidleitung 9 ist als Kunststoff- Verbundrohr ausgeführt. In Vertikalrichtung ist die Zulaufschachtabführöffnung 8 unterhalb der Zulaufschachtzuführöffnung 5 angeordnet. Bezüglich einer Schachtmittelachse 11 sind die Zulaufschachtzuführöffnung 5 und die Zulaufschachtabführöffnung 8 diametral gegenüberliegend an dem Zulaufschacht 4 angeordnet.

Vertikal unterhalb der Zulaufschachtabführöffnung 8 weist der Zulaufschacht 4 einen Absetzraum 12 auf, der zur Aufnahme, insbesondere zum Sammeln, von großen und/oder groben Verunreinigungen dient, die sich beim Einströmen des Mediums in den Zulaufschacht 4 absetzen können, insbesondere bevor das Medium in die erste Fluidleitung 9 strömt.

Die erste Fluidleitung 9 weist eine Mittenachse 13¹ auf, die insbesondere horizontal orientiert ist. Die erste Fluidleitung 9 weist eine senkrecht zur Mittenachse 13¹ orientierte Strömungsquerschnittsfläche auf, die insbesondere kreisförmig ist und durch einen ersten Innendurchmesser d_{i,1} definiert ist.

Entlang der ersten Fluidleitung 9 ist ein Reduzierungselement 14 angeordnet. Das Reduzierungselement 14 ist ein Adapterstück zum Verbinden von zwei Fluidleitungen mit unterschiedlichen Durchmessern. Die erste Fluidleitung 9 ist mittels des Reduzierungselements 14 an eine zweite Fluidleitung 15 angeschlossen, deren Innendurchmesser d_{i,2} kleiner ist als der Innendurchmesser d_{i,1} der ersten Fluidleitung 9. Zur Verbindung mit den Fluidleitungen 9, 15 weist das Reduzierungselement 14 jeweils einen einteilig angeformten Verbindungsflansch auf. Zwischen den Verbindungsflanschen ist ein Reduzierungsabschnitt angeordnet, entlang dessen sich der Strömungsquerschnitt reduziert. Der Reduzierungsabschnitt bildet einen Verjüngungsabschnitt, entlang dessen sich die Strömungsquerschnittsfläche verjüngt. In Folge der Durchmesserreduzierung weist das Reduzierungselement 14 eine nach oben geneigte Sohle 20 in dem Verjüngungsabschnitt auf, an der das Fluid angestaut und sich darin enthaltene Sedimente absetzen können. Das Reduzierungselement 14 ist ein Anstauelement.

Insbesondere sind eine Zulauföffnung 16, mit der das Reduzierungselement 14 an die erste Fluidleitung 9 angeschlossen ist, und eine Ablauföffnung 17, mit der das Reduzierungselement 14 an die zweite Fluidleitung 15 angeschlossen ist, exzentrisch zueinander angeordnet. Insbesondere ist die Ablauföffnung 17 vertikal obenliegend an dem Reduzierungselement 14 angeordnet.

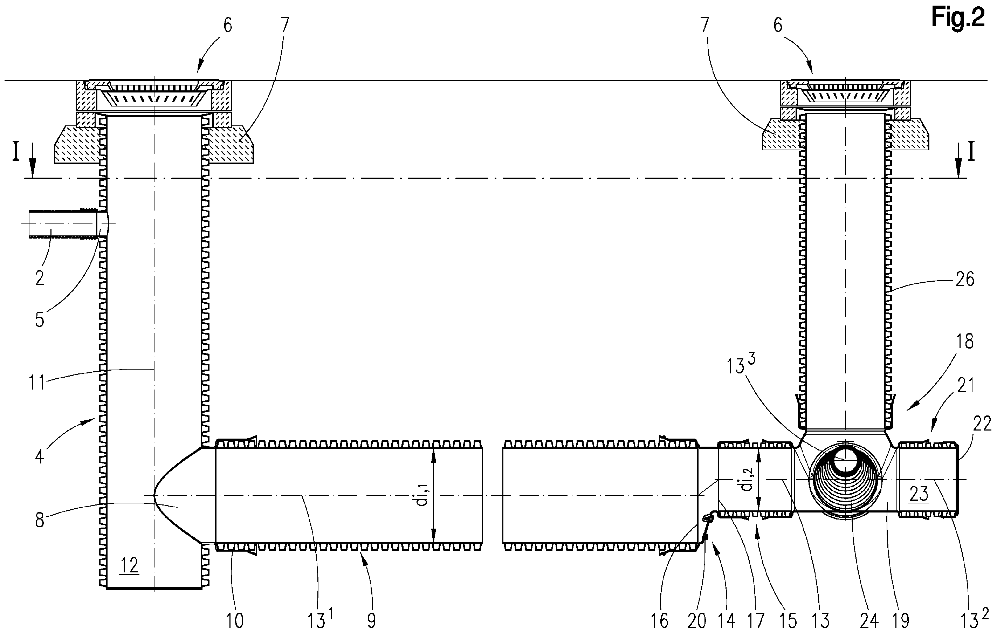

Insbesondere sind die Zulauföffnung 16 und die Ablauföffnung 17 derart angeordnet, dass die Mittenachsen 13¹, 13² der Fluidleitungen 9, 15 in einer gemeinsamen Vertikalebene liegen, die der Zeichenebene gemäß Fig. 2 entspricht. Die Mittenachse 13² der zweiten Fluidleitung 15 ist vertikal oberhalb der Mittenachse 13¹ der ersten Fluidleitung 9 angeordnet. Die erste Fluidleitung 9 und die zweite Fluidleitung 15 bilden eine Hauptleitung.

Die zweite Fluidleitung 15 mündet in einen ersten Zwischenschacht 18, der ein Verteilerstück 19 umfasst. Das Reduzierungselement 14 ist benachbart und insbesondere unmittelbar stromaufwärts des ersten Zwischenschachts 18 angeordnet und mittels der zweiten Fluidleitung 15 an dem ersten Zwischenschacht 18 angeschlossen.

Das Verteilerstück 19 weist einen Rohrstutzen 21 auf, der mittels einer Kappe 22 verschlossen ist. Der Rohrstutzen 21 ist insbesondere durch einen einteilig angeformten Verbindungsflansch des Verteilerstücks 19 gebildet, in den ein kurzer Rohrabschnitt, insbesondere in Form eines Verbundrohres, eingesteckt ist. An seinem gegenüberliegenden Ende ist das Verbundrohr mittels der Kappe 22 abgedeckt. Der durch die Kappe 22 verschlossene Rohrstutzen 21 umschließt einen Totraum 23, in dem sich die Fluidströmung aufstauen und Sedimente absetzen können. Insbesondere bewirkt der Totraum 23 eine Fluidrückströmung in Richtung der diametral zu dem Rohrstutzen 21 gegenüberliegend angeordneten zweiten Fluidleitung 15 und insbesondere zurück zu dem Zulaufschacht 4.

Insbesondere sind der Rohrstutzen 21 und die in das Verteilerstück 19 einmündende zweite Fluidleitung 15 bezüglich ihrer Mittenachsen 13 fluchtend zueinander angeordnet. Insbesondere sind die Innendurchmesser der zweiten Fluidleitung 15 und des Rohrstutzens 21 im Wesentlichen gleich groß und insbesondere identisch.

Das Verteilerstück 19 weist einen weiteren Verbindungsflansch auf, an dem ein zweites Reduzierungselement 24 angeordnet ist. Das zweite Reduzierungselement 24 ist im Wesentlichen identisch zu dem ersten Reduzierungselement 14 ausgeführt und bewirkt eine Reduzierung des Innendurchmessers d_{i,3} der dritten Fluidleitung 25, die an das zweite Reduzierungselement 24 angeschlossen ist. Entsprechend ist die Mittenachse 13³ der dritten Fluidleitung 25 vertikal oberhalb der Mittenachse 13² der zweiten Fluidleitung 15 angeordnet.

In senkrechter Richtung ist an das Verteilerstück 19 ein Schachtrohr 26 angeschlossen, insbesondere mittels eines vertikalen Verbindungsflansches.

Das Schachtrohr 26 ist als Kunststoff- Verbundrohr ausgeführt entsprechend dem Verbundrohr des Zulaufschachts 4. An seiner Oberseite ist der erste Zwischenschacht 18 entsprechend dem Zulaufschacht 4 über ein Betonfundament 7 oder einen Betonauflagering abgestützt und durch eine Schachtabdeckung 6 abgedeckt.

Außerdem ist in Fig. 2 die Schnittebene I-I für die Ansicht der Rohrsedimentationsanlage 1 in Fig. 1 eingezeichnet. Die Schnittebene liegt vertikal unterhalb der Betonfundamente 7, aber vertikal oberhalb der Zulaufleitung 2.

Wie insbesondere aus Fig. 1 unmittelbar erkennbar ist, sind die Vertikalebenen, die die Mittenachsen 13² und 13³ umfassen, geneigt zueinander angeordnet. Diese Vertikalebenen schneiden sich unter einem Umlenkwinkel u von 90°. Der erste Zwischenschacht 18 ist ein Umlenkschacht.

Die dritte Fluidleitung 25 weist einen deutlich reduzierten Innendurchmesser d_{i,3} auf. Die dritte Fluidleitung 25 ist eine Nebenleitung.

Mittels eines Aufweitelements 27 ist die dritte Fluidleitung 25 unmittelbar an einen zweiten Zwischenschacht 28 angeschlossen. Das Aufweitelement 27 ist insbesondere konstruktiv identisch zum zweiten Reduzierungselement 24. Da das Aufweitelement 27 mit dem kleineren Strömungsquerschnitt als Zulauföffnung an die dritte Fluidleitung 25 und mit dem größeren Strömungsquerschnitt der Ablauföffnung in den zweiten Zwischenschacht 28 mündet, ergibt sich daraus eine Aufweitung des Strömungsquerschnitts auf einen Innendurchmesser d_{i,4}, der etwa so groß ist wie der Innendurchmesser d_{i,2}. Insbesondere gilt: 0,8 x d_{i,2} ≤ d_{i,4} ≤ 1,2 x d_{i,2}, insbesondere d_{i,2} ≤ d_{i,4}. Das Aufweitelement 27 ist optional. Es ist auch möglich, die dritte Fluidleitung 25 unmittelbar, also ohne Aufweitelement, an den zweiten Zwischenschacht 28 anzuschließen. Eine Aufweitung auf den größeren Innendurchmesser d_{i,4} ergibt sich dann insbesondere aus einer an den zweiten Zwischenschaft 28 angeschlossenen vierten Fluidleitung 29.

Der zweite Zwischenschacht 28 ist grundsätzlich ähnlich zu dem Zulaufschacht 4 ausgeführt, insbesondere ohne Verteilerstück. Trotzdem ist der zweite Zwischenschacht 28 als Umlenkschacht ausgeführt mit einem Umlenkwinkel u von 90°. Vorteilhaft ist, dass bei dem zweiten Zwischenschacht 28 die beiden Verbindungsflansche gleich groß sind. Der zweite Zwischenschacht 28 ist flexibel einsetzbar. In dem gezeigten Ausführungsbeispiel ist der zweite Zwischenschacht 28 mit den Verbindungsflanschen so angeordnet, dass die vierte Fluidleitung 29 in der Draufsicht gemäß Fig. 1 mit ihrer Mittenachse 13⁴ parallel zu der ersten Fluidleitung 9 und der zweiten Fluidleitung 15 mit den jeweiligen Mittenachsen 13¹, 13² orientiert ist. Die Strömungsrichtung entlang der vierten Fluidleitung 29 ist der der ersten Fluidleitung 9 und zweiten Fluidleitung 15 entgegengerichtet.

Auch der zweite Zwischenschacht 28 weist an seiner Oberseite ein Betonfundament 7 oder einen Betonauflagering sowie eine Schachtabdeckung 6 auf.

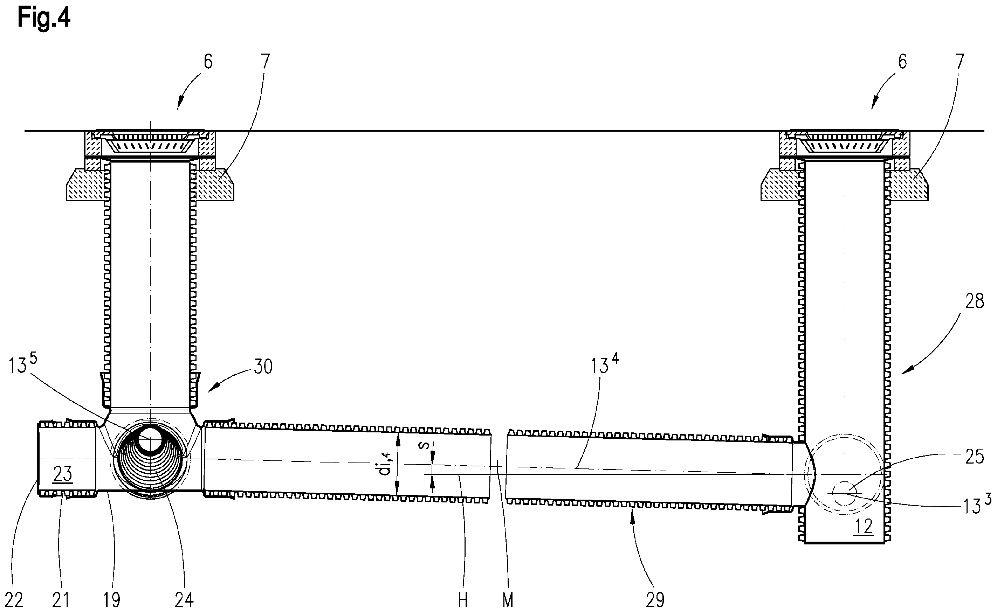

Wie insbesondere in Fig. 4 dargestellt, ist die vierte Fluidleitung 29 mit einer Steigung, also einem negativen Gefälle, gegenüber der Horizontalen H angeordnet. Ein Steigungswinkel s beträgt gemäß dem gezeigten Ausführungsbeispiel 3°. Vorteilhafterweise beträgt der Steigungswinkel s zwischen 2° und 5°.

Die mittlere Höhe der Mittenachse 13⁴ für die vierte Fluidleitung 29, die mit einem Steigungswinkel s ansteigend ausgeführt ist, entspricht dem Höhenwert der Mittenachse 13⁴ an bei halber Länge, also in der Mitte entlang der Axialerstreckung der vierten Fluidleitung 29.

Die vierte Fluidleitung 29 ist als Hauptleitung ausgeführt. Die vierte Fluidleitung 29 weist einen Innendurchmesser d_{i,4} auf, der insbesondere identisch ist mit dem Innendurchmesser d_{i,4} des Aufweitelements 27. Insbesondere ist der Innendurchmesser d_{i,4} der vierten Fluidleitung 29 kleiner oder gleich dem Innendurchmesser d_{i,2} der zweiten Fluidleitung 15. Die vierte Fluidleitung 29 mündet in einen dritten Zwischenschacht 30. Der dritte Zwischenschacht 30 ist als Umlenkschacht ausgeführt. Insbesondere ist der dritte Zwischenschacht 30 analog dem ersten Zwischenschacht 18 ausgeführt mit einem Verteilerstück 19, an dem ein mittels einer Kappe 22 verschlossener Rohrstutzen 21 angeordnet ist. Zum Anschließen einer weiteren, als fünfte Fluidleitung 31 ausgeführten Nebenleitung ist ein weiteres Reduzierungselement 24 vorgesehen.

Der Anschluss der fünften Fluidleitung 31 an einen vierten Zwischenschacht 32 entspricht dem Anschluss der dritten Fluidleitung 25 an den zweiten Zwischenschacht 28, worauf hiermit verwiesen wird. Insbesondere ist der vierte Zwischenschacht 32 identisch zu dem zweiten Zwischenschacht 28 ausgeführt. Insbesondere sind die Zwischenschächte 18, 28, 30 und 32 mit ihren Umlenkwinkeln u, die jeweils exakt 90° betragen, so angeordnet, dass sich eine S-förmige oder mäanderförmige Struktur der Rohrsedimentationsanlage 1 ergibt, wobei die Hauptleitungen jeweils paarweise zueinander parallel angeordnet sind. Entsprechend sind auch die Nebenleitungen jeweils paarweise zueinander parallel angeordnet. Die Hauptleitungen und die Nebenleitungen schließen wechselweise jeweils einen 90°-Winkel ein.

Es versteht sich, dass entsprechend andere Konfigurationen und/oder Anordnungen von Hauptleitungen und/oder Nebenleitungen möglich sind.

Insbesondere ist es möglich, eines oder mehrere Reduzierungselemente entlang einer Hauptleitung und/oder entlang einer Nebenleitung anzuordnen. Außerdem können Hauptleitung und/oder Nebenleitungen mit einem Steigungswinkel s gegenüber der Horizontalen H angeordnet sein.

Aus dem vierten Zwischenschacht 32 mündet unter einem Umlenkwinkel u gegenüber der fünften Fluidleitung 31 eine sechste Fluidleitung 33, deren Mittenachse 13⁶ horizontal orientiert ist. Die sechste Fluidleitung 33 ist eine Hauptleitung. Ein Innendurchmesser d_{i,6} entspricht im Wesentlichen dem Innendurchmesser d_{i,2} und/oder dem Innendurchmesser d_{i,4}.

Der zweite Zwischenschacht 28 und der vierte Zwischenschacht 32 weisen jeweils einen unteren Absetzraum 12 auf, wie er auch an dem Zulaufschacht 4 ausgebildet ist.

Die sechste Fluidleitung 33 mündet in einen Ablaufschacht 34, an dem die Ablaufleitung 3 angeschlossen ist. Der Ablaufschacht 34 ist analog dem Zulaufschacht 4 aus einem Kunststoffmaterial als Verbundrohr ausgeführt und mittels eines Betonfundaments 7 oder eines Betonauflagerings vertikal abgestützt und mit einer Schachtabdeckung 6 ausgeführt. Die Ablaufleitung 3 ist an eine Ablaufschachtabführöffnung 35 angeschlossen, die in vertikaler Richtung bezüglich der Schachtmittelachse 36 vertikal oberhalb des Anschlusses der sechsten Fluidleitung 33 angeordnet ist.

In dem Ablaufschacht 34 ist ein Stauelement 37 angeordnet, das insbesondere als durchgängige Stauwand ausgeführt ist. Das Stauelement 37 steht am Boden 38 des Ablaufschachts 34 auf und erstreckt sich über den gesamten Durchmesser des Ablaufschachts 34. Das Stauelement 37 ist insbesondere entlang einer direkten Verbindungslinie von der Zuführung der sechsten Fluidleitung 33 zu der Ablaufschachtabführöffnung 35 angeordnet. Das Stauelement 37 dient zum Zurückhalten des Mediums, das durch die sechste Fluidleitung 33 in den Ablaufschacht 34 gelangt.

Wesentlich ist, dass eine erfindungsgemäße Rohrsedimentationsanlage 1 mindestens den Zulaufschacht 4, den Ablaufschacht 34 und mindestens einen Zwischenschacht aufweist, wobei zusätzlich mindestens ein Anstauelement vorhanden sein muss. Das Anstauelement kann beispielsweise durch mindestens eines der Reduzierungselemente 14, 24 und/oder durch die mittels der Kappe 22 abgedeckten Rohrstutzen 21 gebildet sein. Es ist ausreichend, wenn mindestens ein Anstauelement vorhanden ist. Es können aber auch mehrere Anstauelemente ausgeführt sein. Die Ausführung von Hauptleitungen und Nebenleitungen mit einem Steigungswinkel ist optional.

Gemäß dem gezeigten Ausführungsbeispiel sind die mittleren Höhen der Fluidleitungen entlang der Fluidströmungsrichtung ansteigend ausgeführt.

## Patentansprüche

1. Rohrsedimentationsanlage mit
a. einem Zulaufschacht (4),
b. einem Ablaufschacht (34),
c. mindestens einem Zwischenschacht (18, 28, 30, 32), der mit dem Zulaufschacht (4) und mit dem Ablaufschacht (34) mittels Fluidleitungen (9, 15, 25, 29, 31, 33) fluidtechnisch verbunden ist,
d. mindestens einem Anstauelement (14, 21, 22, 24) zum Anstauen einer Fluidströmung in der Rohrsedimentationsanlage (1), wobei das mindestens eine Anstauelement (14, 21, 22, 24) an dem mindestens einen Zwischenschacht (18, 28, 30, 32) und/oder an mindestens einer der Fluidleitungen (9, 15, 25, 31) angeordnet ist.

2. Rohrsedimentationsanlage gemäß Anspruch 1, **dadurch gekennzeichnet, dass** das mindestens eine Anstauelement (14, 24) durch ein Reduzierungselement (14, 24) ausgebildet ist.

3. Rohrsedimentationsanlage gemäß Anspruch 2, **dadurch gekennzeichnet, dass** das Reduzierungselement (14, 24) an mindestens einer der Fluidleitungen (9, 15, 25, 31) angeordnet ist, insbesondere unmittelbar stromaufwärts und/oder unmittelbar stromabwärts des mindestens einen Zwischenschachts (18, 30).

4. Rohrsedimentationsanlage gemäß einem der vorstehenden Ansprüche, **dadurch gekennzeichnet, dass** das mindestens eine Anstauelement (21, 22) in dem mindestens einen Zwischenschacht (18, 30) integriert ausgebildet ist, der als Umlenkschacht ausgeführt ist.

5. Rohrsedimentationsanlage gemäß Anspruch 4, **dadurch gekennzeichnet, dass** das mindestens eine Anstauelement (21, 22) einen Totraum (23) umschließt.

6. Rohrsedimentationsanlage gemäß einem der vorstehenden Ansprüche, **dadurch gekennzeichnet, dass** die Fluidleitungen (9, 15, 25, 29, 31, 33) als Hauptleitung (9, 15, 29, 33) und/oder Nebenleitung (25, 31) ausgeführt sind, wobei die Strömungsquerschnittsfläche der Hauptleitung (9, 15, 29, 33) größer ist als die der Nebenleitung (25, 31).

7. Rohrsedimentationsanlage gemäß einem der vorstehenden Ansprüche, **dadurch gekennzeichnet, dass** mindestens eine der Fluidleitungen (29) mit einer Steigung gegenüber der Horizontalen (H) angeordnet ist.

8. Rohrsedimentationsanlage gemäß einem der vorstehenden Ansprüche, **dadurch gekennzeichnet, dass** der Zulaufschacht (4) und/oder der mindestens eine Zwischenschacht (28, 32) einen Absetzraum (12) aufweisen, der vertikal unterhalb der jeweils ausgehenden Fluidleitung (9, 29, 33) angeordnet ist.

9. Rohrsedimentationsanlage gemäß einem der vorstehenden Ansprüche, **dadurch gekennzeichnet, dass** eine mittlere Höhe der Mittenachsen (13¹, 13², 13³, 13⁴, 13⁵, 13⁶) von zwei entlang der Fluidströmungsrichtung hintereinander angeordneten Fluidleitungen (9, 15, 25, 29, 31, 33) zunimmt.

10. Rohrsedimentationsanlage gemäß einem der vorstehenden Ansprüche, **dadurch gekennzeichnet, dass** der mindestens eine Zwischenschacht (18, 28, 30, 32), insbesondere alle Zwischenschächte (18, 28, 30, 32), genau eine Zulauföffnung und genau eine Ablauföffnung aufweist.
